# EUROPEAN PATENT SPECIFICATION

(11) **EP 3 600 132 B1**
(45) Date of publication and mention of the grant of the patent: **27.03.2024**
(21) Application number: 18771177.5
(22) Date of filing: 20.03.2018
(51) Int. Cl.: A61C 7/12

(54) **ADJUSTABLE HOOK FOR ORTHODONTIC BRACKETS**
VERSTELLBARER HAKEN FÜR ORTHODONTISCHE BRACKETS
CROCHET RÉGLABLE POUR BRACKETS ORTHODONTIQUES

(30) Priority: 22.03.2017 US 201762475088 P; 10.10.2017 US 201715729525
(43) Date of publication of application: 05.02.2020
(73) Proprietor: World Class Technology Corporation, McMinnville, OR 97128 (US)
(72) Inventor: RUIZ-VELA, Alberto, Alta Loma, California 91701 (US)
(74) Representative: Weal, Emily Teresa
(86) International application number: PCT/US2018/023400
(87) International publication number: WO 2018/175469

(56) References cited:
- EP-A1- 2 705 807
- WO-A1-2010/105430
- US-A- 5 125 831
- US-A- 5 395 237
- US-A- 5 395 237
- US-A1- 2004 259 048
- US-A1- 2006 263 737
- US-B2- 7 878 802
- US-B2- 9 004 916

## Description

### Technical Field

The field of the present disclosure relates generally to orthodontic brackets and, in particular, to such brackets having an adjustable hook designed to facilitate bending for improving patient comfort, while retaining sufficient stability to prevent unwanted bending in response to orthodontic loads.

### Background

Dental braces are orthodontic devices commonly used to align and straighten a patient's teeth and to correct various other flaws relating to the teeth and jaw. Typically, braces include a set of orthodontic brackets, each bracket being adhered to an individual tooth with a bonding material or other adhesive. Once the brackets are in position on the teeth, an archwire is inserted through a slot formed on each of the brackets. In this configuration, tightening of the archwire applies pressure on the brackets, which in turn urge movement of the teeth into a desired position and orientation. In conventional braces, an elastic ligature or O-ring may be used to retain the archwire in position and ensure that the archwire does not disengage from the bracket slot. In more recent designs, self-ligating braces use a sliding or hinged door mechanism, instead of an elastic ligature, to secure the archwire within the bracket slot.

In both conventional braces and self-ligating braces, certain of the orthodontic brackets, such as those positioned on the canine, premolars, or molars, may include a hook extending outwardly from the bracket body. The hook provides an attachment point for auxiliary devices (such as elastics, coil springs, or power chains) that may be used to occlude crooked teeth together, correct an overbite, and/or correct other issues. When the orthodontic bracket is arranged on a tooth, the hook extends from the bracket body toward the gingiva. For some patients, the hook may cause discomfort or irritation on the cheeks or lips. To alleviate these issues, a dentist or other practitioner may adjust or bend the hook to a more comfortable configuration that best suits the patient's needs.

Currently, orthodontic brackets and hooks are typically made using high-strength materials, such as 17-4 stainless steel. The higher strength materials allow for smaller and thinner bracket designs because the stronger materials provide sufficient strength to withstand orthodontic loads and prolonged use. However, one disadvantage of using high-strength materials is that a large application of force is required to adjust or bend the hook when needed. On some occasions, this large application of force may cause damage to the bracket body and/or hook, may dislodge the bracket from the tooth, and/or may cause other injuries to the patient. Documents EP2 705 807 A1 and WO2010 105 430 show an orthodontic bracket with a hook having a large spherical head.

Accordingly, the present inventor has identified a need for an orthodontic bracket with an improved design to accommodate the use of high-strength materials, while providing sufficient flexibility to minimize the loads required to adjust the hook, and while retaining sufficient stability to prevent unwanted bending in response to orthodontic loads. The orthodontic bracket of the present invention is disclosed in claim 1. Additional aspects and advantages will be apparent from the following detailed description of preferred embodiments, which proceeds with reference to the accompanying drawings.

### Brief Description of the Drawings

FIG. 1 is a view of a conventional orthodontic bracket.
FIG. 2 is an enlarged view of an adjustable hook of the orthodontic bracket of FIG. 1, the hook illustrated in a straightened configuration.
FIG. 3 illustrates a stress analysis of the adjustable hook of FIG. 2 in response to a force applied along a midpoint of the head.
FIG. 4 is an enlarged view of an adjustable hook of an orthodontic bracket of the present invention.
FIG. 5 illustrates a stress analysis of an adjustable hook having a similar geometric design to that of FIG. 4 in response to a force applied along a midpoint of the head.
FIG. 6 illustrates a stress analysis of the adjustable hook of FIG. 5 in response to a force applied along the stem of the hook.
FIG. 7 illustrates another embodiment of an adjustable hook for an orthodontic bracket which is not part of the present invention.

### Detailed Description of Example Embodiments

With reference to the drawings, this section describes particular embodiments of various orthodontic brackets and their detailed construction and operation. Throughout the specification, reference to "one embodiment," "an embodiment," or "some embodiments" means that a particular described feature, structure, or characteristic may be included in at least one embodiment of an orthodontic bracket. Thus appearances of the phrases "in one embodiment," "in an embodiment," or "in some embodiments" in various places throughout this specification are not necessarily all referring to the same embodiment. Furthermore, the described features, structures, and characteristics may be combined in any suitable manner in one or more embodiments. In view of the disclosure herein, those skilled in the art will recognize that the various embodiments can be practiced without one or more of the specific details or with other methods, components, materials, or the like.

In the following description, particular components of the orthodontic brackets may be described in detail. It should be understood that in some instances, well-known structures, materials, or operations are not shown and/or not described in detail to avoid obscuring more pertinent aspects of the embodiments. In addition, although the embodiments may illustrate and reference particular orthodontic bracket designs, other embodiments may include additional or fewer components than the described embodiments, within the scope of the claims.

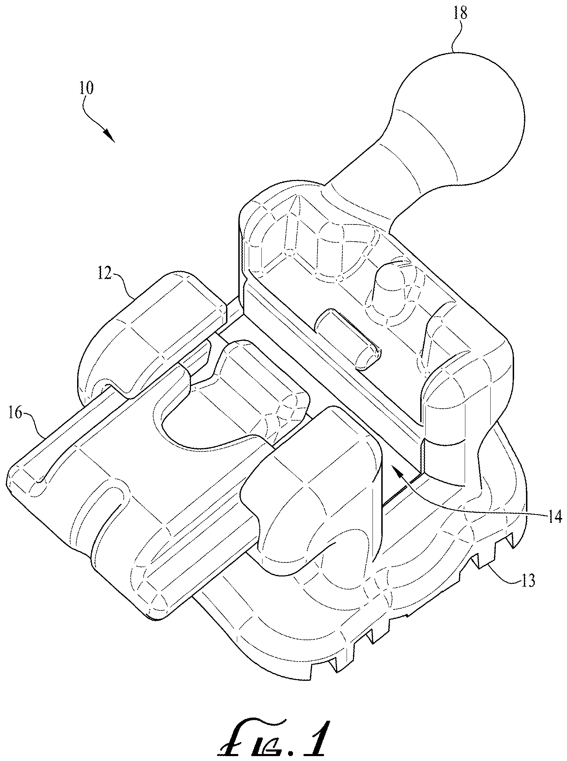

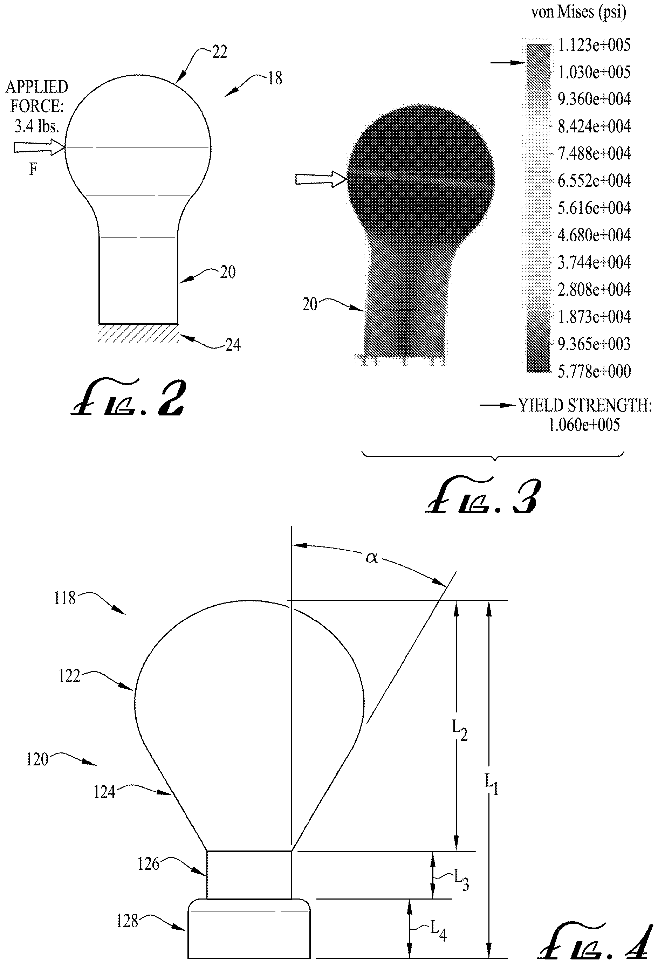

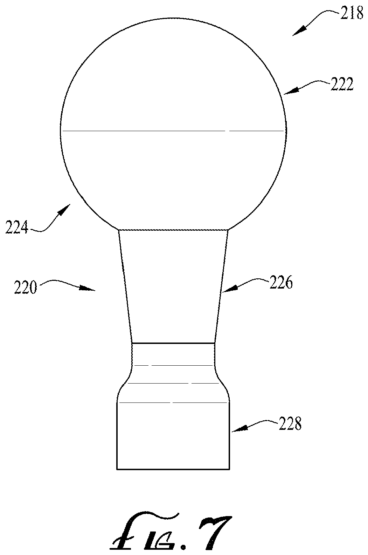

With general reference to FIGS. 1-7, the following disclosure relates to an orthodontic bracket 10 having an adjustable hook 118, 218 (see FIGS. 4 and 7, respectively) designed with an improved geometry to facilitate adjustment or bending of the hook 118, 218 without sacrificing structural stability and strength of the orthodontic bracket 10. Additional details relating specifically to the adjustable hook 118 of the orthodontic bracket 10 are further described in detail below.

FIGS. 1-3 illustrate one embodiment of a conventional orthodontic bracket 10 with an adjustable hook 18. With particular reference to FIG. 1, the conventional orthodontic bracket 10 may include a bracket body 12 mountable to a patient's tooth. In some embodiments, the bracket body 12 may include a series of grooves or ridges 13 formed along a mounting base surface of the bracket body 12. To mount the orthodontic bracket 10 on a patient's tooth, an adhesive or other bonding material may be applied along the mounting base surface and the ridges 13 of the bracket body 12 to provide a solid connection with the tooth and prevent dislodging. The bracket body 12 further includes an archwire slot 14 formed thereon and extending transversely across the bracket body 12 (i.e., in the mesial-distal direction when the orthodontic bracket 10 is mounted to a tooth) from one side edge of the bracket body to an opposite side edge. The slot 14 is sized and dimensioned to receive an archwire (not shown) therein. The orthodontic bracket 10 further includes a suitable ligating structure 16, such as a slidable door or closure, coupled to the bracket body 12. The ligating structure 16 is slidable or movable in the incisal-gingival direction (i.e., a direction extending along the biting surface of the tooth and the gingiva) to an open position for allowing the archwire to enter the slot 14 of the bracket body 12, and to a closed position for securing or retaining the archwire within the slot 14. As mentioned previously, when the ligating structure 16 is in the closed position, the archwire is urged downwardly into the slot 14 and applies pressure to the bracket body 12 and the patient's teeth to effect the desired tooth movement. Additional details and configurations of an example embodiment for an orthodontic bracket are described in U.S. Pat. No. 9,004,916.

It should be understood that the self-ligating orthodontic bracket 10 illustrated in FIG. 1 is merely one example embodiment and is not intended to be limiting within the context of this disclosure. For purposes of this disclosure, one having skill in the art will understand that any other design and configuration of a self-ligating orthodontic bracket may be used. In addition, in other embodiments, the orthodontic bracket may not be a self-ligating bracket, but may instead be a conventional bracket that includes elastic ligatures (e.g., O-rings) instead of a sliding closure.

In some conventional designs, the orthodontic bracket 10 further includes the hook 18 that extends from the bracket body 12 toward the gingiva when the orthodontic bracket 10 is mounted to a tooth. Typically, the hook 18 is formed as an integral component of the bracket body 12, but in other embodiments the hook 18 may be formed separately and thereafter affixed to the bracket body 12. In many conventional designs, the hook 18 has a cross-section on a hook stem 20 that is mostly or entirely uniform, as illustrated in FIGS. 2-3. With reference to FIGS. 2-3, the uniform cross-section of the hook stem 20 results in a uniform yield strength along the length of the hook stem 20. Because of this uniform cross-section, the hook stem 20 does not provide a specific area where the hook 18 is intended to bend when a load is applied to the hook 18 to adjust its position. In addition, as further described in detail below with respect to FIG. 3, the larger uniform cross-section of the hook stem 20 requires a large application of force to effect any adjustment of the hook 18.

In other embodiments, the hook 18 may have any one of a variety of non-uniform cross-sections. In such embodiments, the non-uniform cross-section is intended to improve the retention of an auxiliary device, such as an elastic ligature, that may be attached to the hook 18. However, the non-uniform cross-section is typically not effective in providing a designated location where the hook 18 is intended to bend or for minimizing the force required to bend the hook 18 because the hook shape is maximized for retention as noted previously.

With particular reference to FIGS. 2 and 3, the following section describes an example stress analysis for the conventional design of the hook 18, where the hook 18 is designed with the geometry illustrated in FIG. 2, and where the hook stem 20 has a generally uniform cross-section and a head 22 is generally round and has a constant curvature or arc. As illustrated in FIG. 2, a stem base 24 is fixed to the bracket body 12 (e.g., the stem base 24 is an integral portion of the bracket body 12). The analysis described below is based on the geometry shown below for the hook 18 made of sintered 17-4 stainless steel. As noted in FIGS. 2 and 3, a stress analysis of the hook design demonstrates that the force F required for the hook stem 20 to start bending is approximately 3.4 lbs., with the force F being applied at a midpoint of the head 22.

With collective reference to FIGS. 4-7, the following sections describe embodiments incorporating an improved geometry for the orthodontic bracket, particularly an improved design of the adjustable hook, that promotes bending of the hook with a reduced application of force, and that directs all attached auxiliary devices toward the bend region of the hook to ensure that the hook does not bend or otherwise deform under orthodontic loads. It should be understood that although FIGS. 4-7 focus on the design of the adjustable hook and do not illustrate a particular bracket body with which the hook may be used, the hook may be incorporated into any suitable bracket body without departing from the principles of the disclosed subject matter.

FIG. 4 is an enlarged view of one embodiment of the hook 118 for an orthodontic bracket (such as the orthodontic bracket 10 illustrated in FIG. 1). As illustrated in FIG. 4, the hook 118 includes a hook stem 120 comprising a neck region 124 and a bend region 126. The hook 118 further includes a head 122 extending from the neck region 124 of the hook stem 120, the head 122 having a generally rounded or arcuate shape. As illustrated in FIG. 4, the neck region 124 extends radially outwardly from the bend region 126 toward the head 122 and defines a transition angle, α. Additional details relating to the transition angle, α, are further described below. In one embodiment, the hook 118 is formed as an integral component of the bracket body, where the orthodontic bracket is manufactured via a metal injection molding process of sintered 17-4 stainless steel. In such embodiments, a stem base structure 128 of the hook 118 extends outwardly and away from the bracket body (such as the bracket body 12 of FIG. 1) of the orthodontic bracket. As is further described in detail below, the hook 118 may be molded such that the stem base structure 128 is wider and has a larger cross-sectional area as compared to the bend region 126. This design helps concentrate stresses at the bend region 126 of the hook stem 120, and avoids stress concentration at the junction point between the stem base structure 128 of the hook 118 and the bracket body, thereby avoiding potential failure at the junction point. In addition, the smaller cross-sectional area of the bend region 126 helps minimize loads required to bend the hook 118 to facilitate adjustment of the hook 118 as desired. Additional details of the design geometry and features of the hook 118 are described below.

It should be understood that in other embodiments, the orthodontic bracket may instead be cast or machined, or may use other ductile materials, such as nickel-free stainless steel, 300 series stainless steel alloys, and titanium alloys (e.g., Ti 6-4, commercial pure (CP) titanium, and nickel titanium). Such embodiments preferably incorporate the same characteristics described previously with respect to the hook stem 120 and head 122.

With particular reference to FIG. 4, the following describes an example geometric design of the hook 118, and describes certain advantages introduced by the improved design. With reference to FIG. 4, the hook 118 has an overall length, L₁, extending from the bottom portion of the stem base structure 128 (e.g., where the hook 118 extends from the bracket body 12) to the free end of the head 122. In one example embodiment, the stem base structure 128 has a length, L₄, with the bend region 126 of the hook stem 120 having a length of L₃, as measured from a distal portion of the stem base structure 128 to the bottom portion of the neck region 124. The neck region 124 and head 122 have a combined length, L₂, extending from the distal portion of the bend region 126 to the free end of the head 122. In the present invention, the neck region 124 comprises approximately 25-40% of the length, L₂, and the head 122 comprises the remainder of the length, L₂. The neck region 124 may be generally planar and gradually widen from the bend region 126 toward the head 122, at a transition angle, α, to define a generally tear-drop shape geometry for the neck region 124 and the head 122 as illustrated in FIG. 4. As illustrated, the tear-drop shape comprises an angled surface extending from the bend region 126 of the hook stem 120, the angled surface transitioning into a curved surface extending to the free end of the head 122. As was mentioned previously, this tear-shaped geometry urges any attached auxiliary device to slide downwardly from the head 122 and along the angled neck region 124 toward the bend region 126 to ensure orthodontic loads are concentrated at the bend region 126.

With particular reference to FIG. 4, the following section provides ratio ranges for the various sections of the hook 118. With general reference to FIG. 4, the length, L₂, for the combined neck region 124 and the head 122 is greater than or equal to approximately 60% of the overall length, L₁, of the hook 118. In addition, the length, L₃, of the bend region 126 of the hook stem 120 is equal to or less than approximately 25% of the overall length, L₁. The bend region 126 of the hook stem 120 preferably has a cross-sectional area ranging from approximately 7.10 × 10⁻² mm² (1.1e⁻⁴ in²) to 16.77 × 10⁻² mm² (2.6e⁻⁴ in²). As noted above, the cross-sectional area of the bend region 126 is preferably smaller than the cross-sectional area of the stem base structure 128 to concentrate orthodontic loads away from the junction point between the hook 118 and the bracket body. However, in other embodiments, the stem base structure 128 and the bend region 126 may have the same cross-sectional area, essentially defining a more elongated bend region 126 than the design illustrated in FIG. 4. In still other embodiments, the cross-sectional area of the bend region 126 may be uniform, while in other embodiments the cross-sectional area may instead be variable. Further, the transition angle, α, of the neck region 124 measured from the distal end of the bend region 126 ranges from 10 degrees to 45 degrees.

For example, in one embodiment, the hook 118 may be designed with the following proportions:
L₂ = 70% of L₁
L₃ = 16.6% of L₁
Angle A = 29.6 degrees
Cross-sectional area of hook stem = 11.42 × 10⁻² mm² (1.77e⁻⁴ in²)

In other embodiments, the length, L₂, of the neck region 124 and the head 122 may range from 60% to 75% of the overall length, L₁, of the hook 118, and the length, L₃, of the bend region 126 of the hook stem 120 may range from 15% to 25% of the overall length, L₁, with the bend region 126 having a cross-sectional area ranging from approximately 6.45 × 10⁻² mm² (1.0e⁻⁴ in²) to 19.35 × 10⁻² mm² (3.0 e⁻⁴ in²).

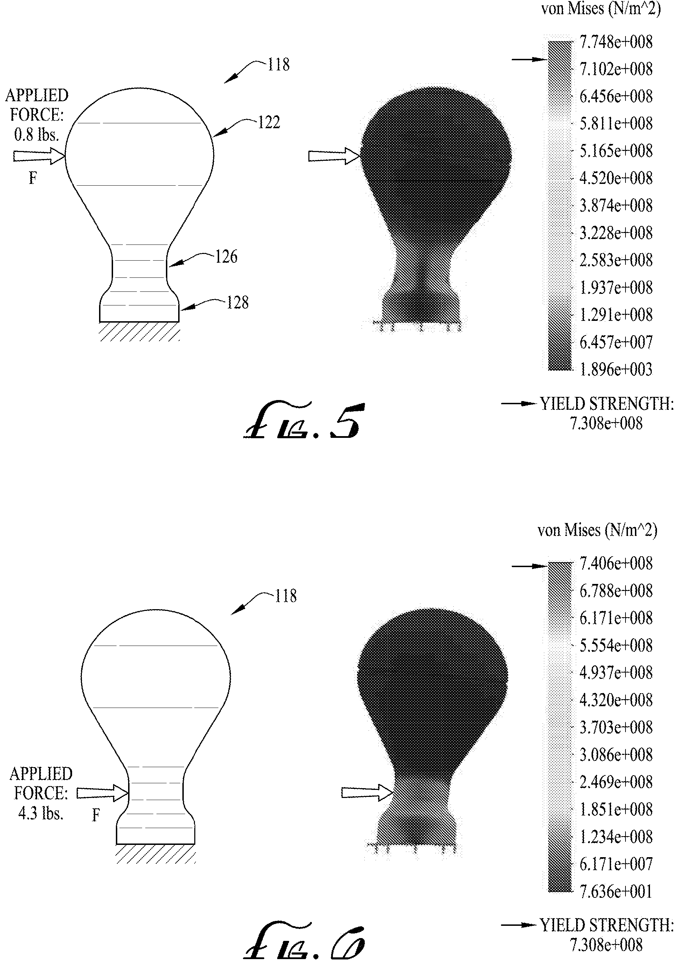

With general reference to FIGS. 5 and 6, the following sections describe bending performance of an adjustable hook 118 having a similar geometric design as the hook described with reference to FIG. 4. It should be noted that the adjustable hook in FIGS. 5 and 6 is similar to the adjustable hook of FIG. 4, but with minor modifications to the curvatures of the bend region 126 and the stem base structure 128 as illustrated. With the improved design characteristics, a stress analysis demonstrates that the force F required for the bend region 126 of the hook stem 120 to start bending is approximately 0.8 lbs., which is less than 25% of the force required to bend the example conventional hook 18 of FIG. 1. In addition, with the reduced cross-sectional area of the bend region 126 of the hook stem 120, the force applied at the head 122 localizes the bending of the hook 118 at the bend region 126 of the hook stem 120 (see FIG. 5).

Moreover, as mentioned previously, when an auxiliary device, such as an elastic, a coil spring, a power chain, or other suitable device, is attached to the hook 118, the curvature of the head 122 and the transition angle, α, of the neck region 124 urges the auxiliary device to slide downwardly and rest against the bend region 126 of the hook stem 120. As illustrated in FIGS. 5 and 6, the bend region 126 has a sufficiently large cross-sectional area to stabilize the hook 118 such that orthodontic loads that are applied to the bend region 126 (e.g., loads applied by the auxiliary device) will not cause the hook 118 to deform. As noted in FIG. 6, the bend region 126 of the hook stem 120 is capable of resisting an applied force F of up to 4.3 lbs. of force before starting to bend.

Accordingly, the geometric design of the hook 118 as illustrated in FIGS. 4-6 provides for an optimal cross-sectional area of the bend region 126 such that the force required to bend the hook 118 is minimized when applied to the head 122. In addition, the design of the head 122 and the neck region 124 drive orthodontic loads downwardly toward the bend region 126, which, despite having a small cross-sectional area, retains sufficient strength and stability to handle typical orthodontic loads applied at the bend region 126 without bending.

FIG. 7 illustrates another embodiment of an adjustable hook 218 for an orthodontic bracket. As illustrated in FIG. 7, the hook 218 includes a hook stem 220, with a bend region 226 and a neck region 224 supporting a head 222. The hook 218 also includes a base structure 228 extending from the bracket body (such as bracket body 12) of the orthodontic bracket. In one embodiment, the hook 218 is formed as an integral component of the bracket body, where the orthodontic bracket is made via a metal injection molding process of sintered 17-4 stainless steel. In other embodiments, the orthodontic bracket may instead be cast or machined.

With reference to FIG. 7, the head 222 is formed as a round surface having a constant curvature and supported by the neck region 224 and the bend region 226 having a generally tapered configuration. In one embodiment, the curvature of the neck region 224 may be the same or substantially the same as the curvature of the head 222, thereby creating a hook 118 with a generally constant curvature for the head 222 and neck region 224. In addition, the bend region 226 of the hook stem 220 may have a greater width adjacent the neck region 224 and gradually narrows from the neck region 224 toward the base structure 228. In a similar fashion as described with reference to FIGS. 5 and 6, the design of the hook 218 provides a region of the hook stem 220 that promotes bending, with the bend region 226 being offset from the base structure 228 where the hook 218 connects to the bracket body to reduce the likelihood of stem fracture at this junction when the hook 218 is bent.

It should be understood that while the figures illustrate two example geometric designs for an improved adjustable hook 118, 218, the scope of the present invention is defined by the claims.

## Claims

1. An orthodontic bracket (10) comprising:
a bracket body (12) mountable to a tooth, the bracket body including a first side edge and an opposite second side edge, wherein the bracket body further includes a slot (14) formed therein and extending across the bracket body from the first side edge to the second side edge, the slot dimensioned to receive an archwire;
a ligating structure (16) coupled to the bracket body; and
an adjustable hook (118, 218) extending from the bracket body, the adjustable hook comprising:
a stem base structure (128, 228);
a hook stem (120, 220) comprising a bend region (126, 226) and a neck region (124, 224), wherein the bend region extends from the stem base structure, the bend region having a length, L₃, and wherein the neck region (124, 224) extends from the bend region; and
a head (122, 222) extending from a distal end of the neck region, the head including a free end, wherein the neck region extends radially outwardly from the bend region toward the head, at a transition angle that ranges from 10 degrees to 45 degrees, to define a generally tear-drop shape geometry for the neck region and the head, the tear-drop shape including an angled surface extending from the bend region of the hook stem, and the angled surface transitioning into a curved surface extending to the free end of the head;
wherein the adjustable hook has a length, L₁, measured from a bottom portion of the stem base structure to the free end of the head, and a length, L₂, measured from a bottom portion of the neck region to the free end of the head, wherein L₃ is equal to or less than 25% of L₁, wherein the neck region is approximately 25% to 40% of the length L₂ and the head comprises the remainder of the length L₂, and wherein L₂ is greater than or equal to 60% of L₁.

2. The orthodontic bracket of claim 1, wherein a cross-sectional area of the bend region ranges between 6.45 × 10⁻² mm² (1.0e⁻⁴ in²) and 19.35 × 10⁻² mm² (3.0e⁻⁴ in²).

3. The orthodontic bracket of claim 2, wherein the cross-sectional area of the bend region ranges between 7.10 × 10⁻² mm² (1.1e⁻⁴ in²) and 16.77 × 10⁻² mm² (2.6e⁻⁴ in²).

4. The orthodontic bracket of claim 1, wherein the adjustable hook is formed as an integral component of the bracket body.

5. The orthodontic bracket of claim 1, wherein the adjustable hook and bracket body are manufactured using a metal injection molding process.

6. The orthodontic bracket of claim 1, wherein the bracket body comprises 17-4 stainless steel.

## Patentansprüche

1. Kieferorthopädisches Bracket (10), umfassend:
einen Bracketkörper (12), der an einem Zahn befestigt werden kann, wobei der Bracketkörper eine erste Seitenkante und eine gegenüberliegende zweite Seitenkante einschließt, wobei der Bracketkörper ferner einen Schlitz (14) einschließt, der darin ausgebildet ist und sich über den Bracketkörper von der ersten Seitenkante zu der zweiten Seitenkante erstreckt, wobei der Schlitz bemessen ist, um einen Bogendraht aufzunehmen;
eine Ligaturstruktur (16), die mit dem Bracketkörper gekoppelt ist; und
einen verstellbaren Haken (118, 218), der sich von dem Bracketkörper erstreckt, der verstellbare Haken umfassend:
eine Schaftbasisstruktur (128, 228);
einen Hakenschaft (120, 220), umfassend eine Biegeregion (126, 226) und eine Halsregion (124, 224), wobei sich die Biegeregion von der Schaftbasisstruktur erstreckt, wobei die Biegeregion eine Länge, L₃, aufweist, und wobei sich die Halsregion (124, 224) von der Biegeregion erstreckt; und
einen Kopf (122, 222), der sich von einem distalen Ende der Halsregion erstreckt, wobei der Kopf ein freies Ende einschließt, wobei sich die Halsregion von der Biegeregion zu dem Kopf hin mit einem Übergangswinkel, der in einem Bereich von 10 Grad bis 45 Grad liegt, radial nach außen erstreckt, um eine im Allgemeinen tropfenförmige Geometrie für die Halsregion und den Kopf zu definieren, wobei die Tropfenform eine abgewinkelte Oberfläche einschließt, die sich von der Biegeregion des Hakenschafts erstreckt, und wobei die abgewinkelte Oberfläche in eine gekrümmte Oberfläche übergeht, die sich zu dem freien Ende des Kopfs erstreckt;
wobei der verstellbare Haken eine Länge, L₁, gemessen von einem unteren Abschnitt der Schaftbasisstruktur zu dem freien Ende des Kopfs, und eine Länge, L₂, gemessen von einem unteren Abschnitt der Halsregion zu dem freien Ende des Kopfs, aufweist, wobei L₃ gleich oder kleiner als 25 % von L₁ ist, wobei die Halsregion etwa 25 % bis 40 % der Länge L₂ beträgt, und der Kopf den Rest der Länge L₂ umfasst, und wobei L₂ größer als oder gleich 60 % von L₁ ist.

2. Kieferorthopädisches Bracket nach Anspruch 1, wobei eine Querschnittsfläche der Biegeregion in einem Bereich zwischen 6,45 × 10⁻² mm²(1,0e⁻⁴ in²) und 19,35 × 10⁻² mm²(3.0e⁻⁴ in²) liegt.

3. Kieferorthopädisches Bracket nach Anspruch 2, wobei die Querschnittsfläche der Biegeregion in einem Bereich zwischen 7,10 × 10⁻² mm² (1,1 e⁻⁴ in²) und 16,77 × 10⁻² mm² (2,6e⁻⁴ in²) liegt.

4. Kieferorthopädisches Bracket nach Anspruch 1, wobei der verstellbare Haken als ein integraler Bestandteil des Bracketkörpers ausgebildet ist.

5. Kieferorthopädisches Bracket nach Anspruch 1, wobei der verstellbare Haken und der Bracketkörper unter Verwendung eines Metallspritzgussverfahrens hergestellt werden.

6. Kieferorthopädisches Bracket nach Anspruch 1, wobei der Bracketkörper 17-4 Edelstahl umfasst.

## Revendications

1. Boîtier orthodontique (10) comprenant :
un corps de boîtier (12) pouvant être monté sur une dent, le corps de boîtier comportant un premier bord latéral et un second bord latéral opposé, dans lequel le corps de boîtier comporte en outre une fente (14) formée à l'intérieur de celui-ci et s'étendant à travers le corps de boîtier du premier bord latéral au second bord latéral, la fente étant dimensionnée pour recevoir un arc dentaire ;
une structure de ligature (16) accouplée au corps de boîtier ; et
un crochet réglable (118, 218) s'étendant depuis le corps de boîtier, le crochet réglable comprenant :
une structure de base de tige (128, 228) ;
une tige de crochet (120, 220) comprenant une région de courbure (126, 226) et une région de col (124, 224), dans lequel la région de courbure s'étend depuis la structure de base de tige, la région de courbure ayant une longueur, L₃, et dans lequel la région de col (124, 224) s'étend depuis la région de courbure ; et
une tête (122, 222) s'étendant depuis une extrémité distale de la région de col, la tête comportant une extrémité libre, dans lequel la région de col s'étend radialement vers l'extérieur depuis la région de courbure vers la tête, selon un angle de transition qui va de 10 degrés à 45 degrés, pour définir une géométrie généralement en forme de goutte d'eau pour la région de col et la tête, la forme de goutte d'eau comportant une surface inclinée s'étendant depuis la région de courbure de la tige de crochet, et la surface inclinée devenant une surface incurvée s'étendant jusqu'à l'extrémité libre de la tête ;
dans lequel le crochet réglable a une longueur, L₁, mesurée d'une partie inférieure de la structure de base de tige à l'extrémité libre de la tête, et une longueur, L₂, mesurée d'une partie inférieure de la région de col à l'extrémité libre de la tête, dans lequel L₃ est inférieure ou égale à 25 % de L₁, dans lequel la région de col fait approximativement 25 % à 40 % de la longueur L₂ et la tête comprend le reste de la longueur L₂, et dans lequel L₂ est supérieure ou égale à 60 % de L₁.

2. Boîtier orthodontique selon la revendication 1, dans lequel une aire en coupe transversale de la région de courbure est comprise entre 6,45 × 10⁻² mm² (1,0e⁻⁴ pouce²) et 19,35 × 10⁻² mm² (3,0e⁻⁴ pouces²).

3. Boîtier orthodontique selon la revendication 2, dans lequel l'aire en coupe transversale de la région de courbure est comprise entre 7,10 × 10⁻² mm² (1,1e-⁴ pouce²) et 16,77 × 10⁻² mm² (2,6e⁻⁴ pouces²).

4. Boîtier orthodontique selon la revendication 1, dans lequel le crochet réglable est formé en tant que composant solidaire du corps de boîtier.

5. Boîtier orthodontique selon la revendication 1, dans lequel le crochet réglable et le corps de boîtier sont fabriqués à l'aide d'un processus de moulage par injection de métal.

6. Boîtier orthodontique selon la revendication 1, dans lequel le corps de boîtier comprend de l'acier inoxydable 17-4.
